(19) Europäisches Patentamt

European Patent Office

Office européen des brevets

(11) EP 0 889 654 A2

(12) **EUROPEAN PATENT APPLICATION**

(43) Date of publication:
07.01.1999 Bulletin 1999/01

(51) Int Cl.⁶: **H04N 7/36**

(21) Application number: 98305263.0

(22) Date of filing: 02.07.1998

(84) Designated Contracting States:
**AT BE CH CY DE DK ES FI FR GB GR IE IT LI LU MC NL PT SE**
Designated Extension States:
**AL LT LV MK RO SI**

(30) Priority: 02.07.1997 US 887205

(71) Applicant: **Xirlink, Inc.**
San Jose, California 95131 (US)

(72) Inventors:
• **Lin, Min-Hsiung**
Saratoga, California 95070 (US)
• **Yeh, Tong-Fei**
Milpitas, California 95035 (US)

(74) Representative:
**Luckhurst, Anthony Henry William**
**MARKS & CLERK,**
**57-60 Lincoln's Inn Fields**
**London WC2A 3LS (GB)**

(54) **Video compression for limited bandwidth video data communication**

(57) In a time domain video compression and decompression system, difference frames obtained by subtracting pairs of consecutive frames in a time sequence of video frames are quantized to reduce the number of bits by coding the signals are transmitted. Offsets are added or subtracted from the signals in the difference frames for reducing truncation errors as a result of quantization. The dynamic range of the difference signals is reduced by clamping the maximum amplitudes of the difference signals to below certain predetermined values. Incomplete frames as well as complete frames are transmitted from the encoder to the decoder and the decoder ascertains the degree of completeness of the frames and decides whether to display or discard the incomplete frames based on how complete they are.

FIG._1

EP 0 889 654 A2

## Description

BACKGROUND OF THE INVENTION

This invention relates in general to video compression systems and, in particular, to a video compression and de-compression system for limited bandwidth video data communication.

Analog video cameras with capture cards have been traditionally used for capturing video images and supplying video signals representative of such images to personal computers. The highest frame rate for currently used capture card is 15 frames per second. Not many personal computers have been equipped with video cameras, partly because of the costs of the camera and capture card, and partly because of complicated installation procedures of the capture card.

With the advent of the Universal Serial Bus (USB) standard, a direct digital input path to the personal computer is provided. The USB based digital video camera can deliver video images to the personal computer without a capture card. This not only reduces costs but also simplifies installation procedures. However, the maximum bandwidth of USB using isochronous transaction mode is only eight Mega bits per second. With this limited bandwidth, the USB can transmit only 4:2:0 QCIF (176 x 144) resolution image at 26 frames per second. To deliver high quality video, it is desirable to provide higher resolution video such as CIF (352 x 288), a better color format such as 4:2:2, at a higher frame rate such as 30 frames per second is desirable. There is great demand for a good compression system which is easy to implement and yet produces enough compression to be able to transmit within the bandwidth of USB.

A number of video compression standards have been adopted and used for a number of years, such as JPEG, MPEG, H.261 and H.263. These standards are similar in the sense that they all employ discrete cosine transformation (DCT), motion compensation and entropy coding.

The above-described standards are based on the knowledge that the principal change occurring between successive video frames is the inhomogeneous motion of the objects within the frame. It has also been recognized that an accurate estimation and compensation for this spatially dependant motion enables the construction of an inter-frame data compression method and apparatus. In other words, by estimating the motion of objects between successive frames, better performing algorithms can be achieved.

While the above-described standards such as the MPEG can achieve impressive compression ratios without introducing too much image degradation, the processes involved in MPEG based encoder systems, such as block based motion estimation and DCT, are very complicated. Sophisticated processing chips are required to perform real time video compression. In applications such as personal computers equipped with digital video cameras, compression ratios such as those achieved using such sophisticated processing chips are not necessary. On the other hand, for these applications, moderate compression with good quality pictures is still desirable. It is, therefore, desirable to provide an improved compression system for applications such as the personal computer equipped with USB based digital cameras.

SUMMARY OF THE INVENTION

On aspect of the invention is directed towards a method for encoding a time sequence of frames of video signals, comprising computing a difference frame between two consecutive frames in the sequence and quantizing the difference frame of video signals or a frame of video signals derived therefrom employing quantizers that reduce number of bytes for coding the video signals in the difference frame to generate a compressed difference frame.

Another aspect of the invention is directed towards a method for encoding a time sequence of frames of video information, comprising computing differences between pairs of consecutive frames, or frames derived therefrom, in the sequence to obtain a sequence of corresponding difference frames; quantizing the difference frames or frames derived therefrom to provide a sequence of quantized frames; and transmitting the quantized frames through a medium having a bandwidth, wherein less than a complete frame of at least one of the quantized frames is transmitted when the bandwidth of the medium is inadequate for transmission of said at least one of the quantized frames.

Still another aspect of the invention is directed towards a method for decoding a time sequence of frames containing video information received from a medium, wherein at least one of said frames may be an incomplete frame. The method comprises detecting any incomplete frame in the sequence of frames received; obtaining a measure of completeness of any incomplete frame detected; and determining whether to discard any incomplete frame detected from said measure of its completeness according to a criterion.

One more aspect of the invention is directed towards a method for encoding a time sequence of frames of video information, comprising computing differences between at least two consecutive frames in the sequence, or frames derived therefrom, to obtain at least one corresponding difference frame; adding an offset to at least some of the signals in the difference frame to provide a modified difference frame; and quantizing the modified difference frame or a frame derived therefrom to provide a quantized frame of signals.

Yet another aspect of the invention is directed towards a method for encoding a time sequence of frames of video information comprising computing differences in signals between at least two consecutive frames in the sequence, or frames derived therefrom, to obtain at least one corresponding difference frame of signals; comparing the amplitudes of the signals in the difference frame to a threshold, and setting amplitude of at least one of the signals in the difference frame to a predetermined value when the amplitude of the at least one signal exceeds the threshold to provide a modified difference frame; and quantizing the modified difference frame or a frame derived therefrom to provide a quantized frame of signals.

One additional aspect of the invention is directed towards a system for encoding a time sequence of frames of video signals, comprising means for computing a difference frame between two consecutive frames in the sequence and means for quantizing the difference frame of video signals or a frame of video signals derived therefrom employing quantizers that reduce number of bytes for coding the video signals in the difference frame to generate a compressed difference frame.

Yet one more aspect of the invention is directed towards a system for encoding a time sequence of frames of video information, comprising means for computing differences between pairs of consecutive frames in the sequence or frames derived therefrom to obtain a sequence of corresponding difference frames; means for quantizing the difference frames or frames derived therefrom to provide a sequence of quantized frames; and means for transmitting the quantized frames through a medium having a bandwidth, wherein the transmitting means transmits less than a complete frame of at least one of the quantized frames when the bandwidth of the medium is inadequate for transmission of said at least one of the quantized frames.

Still another aspect of the invention is directed towards a system for decoding a time sequence of frames containing video information received from a medium, wherein at least one of said frames may be an incomplete frame, comprising means for detecting any incomplete frame in the sequence of frames received; means for obtaining a measure of completeness of any incomplete frame detected; and means for determining whether to discard any incomplete frame detected from said measure of its completeness according to a criterion.

Another aspect of the invention is directed towards a system for encoding a time sequence of frames of video information, comprising means for computing a difference frame of signals between at least two consecutive frames in the sequence, or frames derived therefrom, to obtain at least one corresponding difference frame of signals; means for adding an offset to at least some of the signals in the difference frame to provide a modified difference frame; and means for quantizing the modified difference frame or a frame derived therefrom to provide a quantized frame of signals.

Yet one more aspect of the invention is directed towards a system for encoding a time sequence of frames of video information, comprising means for computing a difference frame of signals between at least two consecutive frames in the sequence, or frames derived therefrom, to obtain at least one corresponding difference frame; means for comparing the amplitudes of the signals in the difference frame to a threshold, and setting one or more of the signals in the difference frame to one or more predetermined values when amplitude(s) of the one or more signals exceeds the threshold to provide a modified difference frame; and means for quantizing the modified difference frame or a frame derived therefrom to provide a quantized frame of signals.

## BRIEF DESCRIPTION OF THE DRAWINGS

Fig. 1 is a block diagram of a time domain video compression and decompression system for limited bandwidth video data communication to illustrate the preferred embodiment of the invention.

Figs. 2A and 2B are schematic views of two consecutive video frames in a time sequence, the frame in Fig. 2A acquired at time t and the one in Fig. 2B acquired at time t+1 in the sequence.

## DETAILED DESCRIPTION OF THE PREFERRED EMBODIMENT

Many conventional video compression processes are complicated because they employ time domain to frequency domain transformation, such as DCT, as well as block based motion estimation, prior to quantization. One aspect of the invention is based on the observation that the data compression can be much simplified by operating in the time domain instead of the frequency domain. Thus, in the preferred embodiment, time domain signals are quantized and transmitted, rather than frequency domain signals, such as DCT coefficients. Quantization of time domain video signals has been found to provide sufficient compression for use in personal computers equipped with USB based digital video cameras.

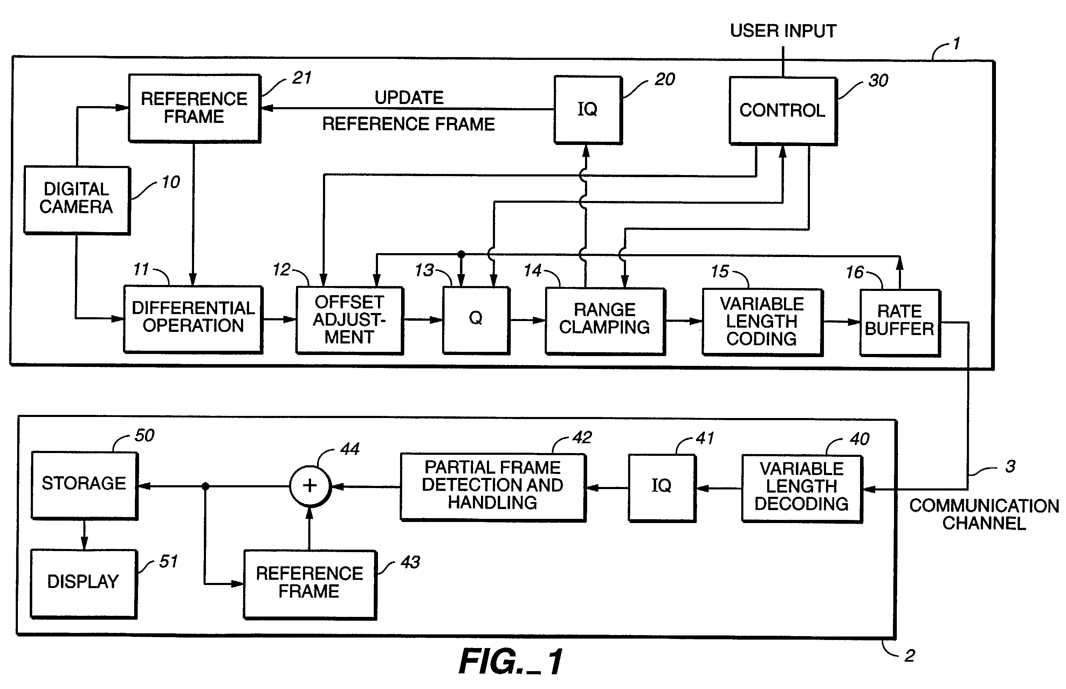

In reference to Fig. 1, the time domain data compression and decompression system includes an encoder 1 and a decoder 2 connected to the encoder by a communication channel or medium 3 of limited bandwidth. The encoder and decoder may be implemented in hardware using a pipelined approach. A digital video camera 10 in the encoder 1 acquires a time sequence of consecutive frames of video signals. Upon initialization, the reference frame storage 21 stores a frame with all zero values. The first frame is provided to differential operation block 11. Block 11 subtracts from it the all zero frame stored in storage 21. For the first frame, no offset is applied by block 12 and the quantizer applies no quantization (Q set to 1). No range clamping is applied, and the unaltered first frame is coded by block 15 and transmitted. Alternatively, the first frame may be applied directly to buffer 16 for transmission to the storage 50 in the decoder 2 through the medium, and the first frame is applied to the reference frame 21 for processing the second frame in the sequence.

To reduce the amount of storage capacity required in reference frame storage blocks 21 and 43 in the encoder and decoder, it is possible to store only a partial frame rather than a complete frame. Thus, for example, if only odd pixel lines of video data are stored in storage blocks 21 and 43, when line 2 is processed by block 11 or adder 44, blocks 11 and adder 44 can use pixel line 1 or 3 instead of the missing line 2 in the reference frame stored, in the subtraction or addition. Alternatively, interpolation techniques may be used in the differential operation block 11 and adder 44 to arrive at the missing lines or pixels in the frame for the subtraction or addition. Thus, in the description herein, whenever it is stated that a frame is to be stored in a reference frame storage and used in an operation, it will be understood that the storage of a partial frame and usage of such partial frame in an operation are also possible; such and other variations are within the scope of the invention.

Thus, when the second frame in the time sequence is supplied to differential operation 11, block 11 subtracts from such frame the reference frame (first frame of the sequence in this instance) stored in reference frame storage 21, where for each pixel in the frame, the video signal for such pixel in the first reference frame is subtracted from that in the second frame for the same pixel to arrive at a difference signal. This is performed for all the pixels in the frame to yield a frame of difference signals which is also referred to as a difference frame.

In the preferred embodiment, block 11 provides the difference frame to offset adjustment block 12 which adds or subtracts an offset from one or more of the signals in the difference frame. Preferably, the same offset is subtracted from or added to all of the difference signals in the difference frame. After such offset adjustment, the difference frame is supplied to quantization block 13 which quantizes the difference frame by dividing each of the signals in the difference frame by a quantizer. The quantized frame at the output of block 13 is then preferably applied to a range clamping block 14 which reduces the dynamic range of the quantized signals in the quantized frame in a manner described below. The frame at the output of range clamping block 14 is then coded by variable length coding block 15 into a bitstream which is applied to rate buffer 16. In the preferred embodiment, rate buffer 16 is a FIFO with a begin pointer and an end pointer. By monitoring the unfilled capacity in the rate buffer, it is possible to monitor the bandwidth of the medium 3 utilized by data transmission from the encoder to the decoder.

Range clamping block 14 also provides the same range clamped frame supplied to block 15 to inverse quantizer 20 which multiplies the difference signals in the frame by the quantizer(s) applied by quantizer block 13. The quantizer(s) applied by block 13 are transmitted along with the quantized frame by block 13 to blocks 14 and 20, so that the value(s) of the quantizer(s) are available to block 20. The inverse quantized difference frame is then applied to reference frame storage 21 and added to the first frame stored in reference frame store 21. The reference frame storage 21 now stores an updated reference frame that results from the addition.

The above-described process is repeated when the digital video camera 10 acquires the third frame in the time sequence and provides such frame to differential operation block 11 which then subtracts from the signals in such block the updated reference frame on a pixel-by-pixel basis. The above-described process is repeated so that the variable length coding block 15 provides a continual bitstream containing information concerning frames in the sequence to the rate buffer 16.

The communication channel or medium 3 has a limited bandwidth so that data can be transmitted from the buffer through medium 3 only at a limited bit rate. Therefore, depending on the bit rate of the bitstream that is applied by block 15 to the rate buffer, the rate buffer may become full so that it can no longer store incoming frames. As data is being written into the rate buffer 16, the reading of the end pointer will increase and when data is read out from the buffer, the reading of the begin pointer will increase. If data continues to be written into the buffer at a rate faster than data is read out from the buffer for transmission through the medium 3, the end pointer will loop around and catch up with the begin pointer. In the preferred embodiment, if the end pointer has just about caught up with the begin pointer except for a fixed number of bytes, such as two or four bytes, this indicates that the rate buffer will be full soon and unable to accept further data from block 15. In such circumstances, the frame that is being written into the rate buffer at such instant will most likely be incompletely stored in the buffer. The system will simply stop writing further data into the buffer but a special coding word is inserted to signify that the frame is incomplete. The buffer 16 will stop accepting further data from the bit stream until more capacity is freed up in the buffer. This indicates that the data compression applied is inadequate so that the number of bits required for encoding incoming frames may need to be decreased. For this purpose, rate buffer 16 provides a feedback signal to the offset adjustment block 12 and the quantizer block 13. Thus when the end pointer has caught up to within a predetermined number of bytes from the begin pointer, such as four bytes, the feedback signal from the rate buffer will indicate that the rate buffer will soon be full and that the number of bits for coding each frame should be reduced.

Quantizer 13 divides each of the signals in the frame from block 12 by a quantizer. The initial value of the quantizer may be selected by the user through control 30. In one embodiment, it is possible to apply one of four quantizer values listed below:

$Q_0 = 1$
$Q_1 = 2$
$Q_2 = 4$

$Q_3 = 8$

Obviously, more or fewer quantizer values can be employed and are within the scope of the invention. Through user input, control 30 causes the initial value of the quantizer to be one of the four values, such as $Q_1$. Hence, in the above-described process for quantizing the frame from block 12, $Q_1$ is used for quantizing the frames. Upon receipt of the feedback signal from the rate buffer 16 indicating that the rate buffer will soon be full, quantizer block 13 will cause the next higher value of the quantizer to be selected, in this case $Q_2$ which has the value of 4.

If this increase in the value of the quantizer slows down the bit rate of the bitstream applied to the rate buffer to the extent that the end pointer is no longer within the determined number of bytes from the begin pointer, the feedback signal from the rate buffer 16 to the quantizer block 13 will so indicate, so that the quantizer block 13 will automatically select the next lower value of the quantizer, in this case, $Q_1$ having the value of 2, to be the quantizer to be applied to incoming frames. Such procedure is preferable since the high bit rate of the frames to the rate buffer 16 causing the increase in the quantizer value from $Q_1$ to $Q_2$ may be a temporary phenomenon caused by a sudden movement of the objects in the frame which may not be repeated in subsequent frames. In such circumstances, it would be desirable for the quantizer value to return to the previous low value prior to such temporary phenomenon for better quality pictures. Otherwise, a temporary phenomenon may cause the picture quality to be degraded indefinitely. If after the quantizer returns to the prior lower value, again the end pointer catches up within the predetermined number of bytes of the begin pointer, the feedback signal from rate buffer 16 will again cause the quantizer block 13 to apply a higher value of quantization. If this process is repeated a predetermined number of times such as eight times, this is sensed by the control block 30 which then either causes the frame rate of the encoder-decoder system to be reduced, or instructs the quantization block 13 to apply the higher quantizer value even when the end pointer is not within the predetermined number of bytes from the begin pointer.

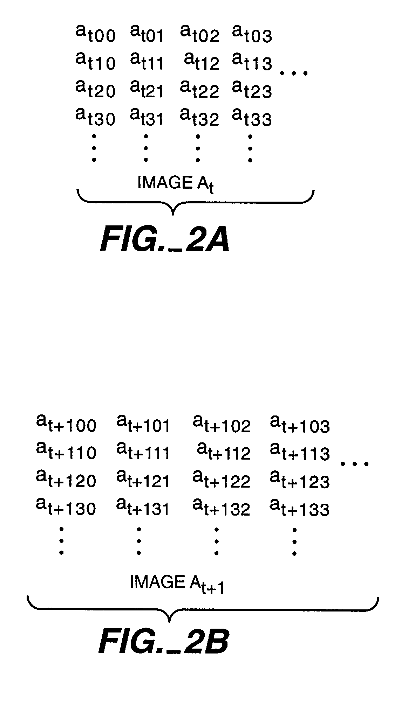

Figs. 2A and 2B are schematic views of two consecutive video frames in a time sequence, the frame in Fig. 2A being acquired at time t and the one in Fig. 2B acquired at the next time instance t+1 in the sequence. As shown in Figs. 2A and 2B, each frame contains a number of rows and columns of pixel values, where the pixel value at the ith row and the jth column in the frame of Fig. 2A would be $a_{tij}$ and that in the frame in Fig. 2B would be $a_{t+1ij}$. Thus, block 11 would perform the operation $a_{t+1ij} - a_{tij}$ for all values of i and j. The output of block 11 would then be a difference frame whose pixel values are given by $a_{t+1ij} - a_{tij}$.

In addition to dividing the signal values in the difference frames by one or more quantizer values, the quantizer block 13 also truncates the signals after the division. This means that if the signal value after the division by the quantizer is less than one, then said signal is set to zero. If the signal value after the division by the quantizer is between the values of one and two then the signal value is set to one. The same is true if the signal value is between other consecutive integer values where the signal value will be set to the lower integer value. Such method of truncation is desirable because it is easy to implement. Other methods of truncation/rounding are possible and are within the scope of the invention.

Generally speaking, the signal values or pixel values between two consecutive frames such as the frames in Figs. 2A and 2B are very close so that $a_{t+1ij} - a_{tij}$ is approximately zero. This is illustrated in equation 1 below:

$$(1) \qquad \Delta a_{t+1\,ij} = \frac{(a_{t+1\,ij} - a_{tij})}{Q} \approx 0$$

When there is motion of objects in the frame between consecutive frames, this will not be true and to increase the compression ratio, more zeros are needed in the difference frame. This can be obtained by increasing the quantizer values applied to divide the difference signals and truncation as described above. However, when the value of the quantizer is increased, this will also introduce larger quantization errors. Thus, if the quantizer is applied is $Q_3$ having the value of eight, then all of the pixel values in the difference frame having values within the range of +7 to -7 will result in a zero due to the division and truncation. In order to adjust the truncation error to produce desirable quality of images despite the increase in the quantizer value, a small number $\beta$ known as an offset may be added to or subtracted from the pixel values or difference signal values in the difference frame in the enumerator of the equation (1) to adjust the number of zeros produced. Ideally, the offset selected is such that after the difference signal value is divided by the quantizer, the result is close to zero at many or most pixels in the difference frame. The inclusion of an offset in equation (1) results in a revised equation such as in equation 2 shown below:

$$(2) \qquad \Delta a_{t+1\,ij} = \frac{(a_{t+1\,ij} - a_{ti\,j} \pm \beta)}{Q} \approx 0$$

Ideally, by adding or subtracting the offset, the resulting pixel value after the division by the quantizer is once again close to zero to reduce the truncation error.

The offset is added or subtracted from at least one of the difference signal or pixel value in the difference frame, and preferably from all of the difference signals or pixel values in the difference frame. The offset value applied by block 12 may be initially set by the user through control 30. When the feedback signal from the rate buffer 16 indicates that the rate buffer is almost full as described above, this will cause the quantizer block 13 to increase the quantizer value. This will normally increase the truncation errors in the manner described above. To reduce the truncation errors caused by the increase in the value of the quantizer by block 13, the feedback signal from buffer 16 will also cause the offset adjustment block 12 to reduce the value of the offset applied to the next lower value of a table of values. Thus, if initially the offset value is set to two, an indication from the rate buffer through feedback that the rate buffer will be full will cause the offset applied by block 12 to be reduced to one, for example. The above described features of the quantizer 13 and offset adjustment 12 in response to rate buffer feedback may be implemented in these blocks by means of logic circuits.

Obviously, other procedures and processes for adjusting the offset in response to feedback from the rate buffer can be used and are within the scope of the invention. Instead of responding to a feedback signal from the rate buffer 16, the offset adjustment block 12 can also be made to respond directly to the change of quantizer value from block 13 through a control path (not shown) from the quantizer block 13 to the offset adjustment block 12. All such variations are within the scope of the invention. The above-described procedure for dynamically adjusting the quantizer value and offset enables a more uniform and predetermined compression ratio to be maintained.

If the values of video signals of all the frames in the time sequence applied to the encoder are in the range of 0 to 255, and if no quantization is applied, then the difference signal values or pixel values in the difference frames at the output of the quantizer block 13 will be in the range -255 to +255. If the quantizer block applies $Q_1$ having the value 2, then the difference signal values will be in the range from -127 to +127, so that 255 different levels would need to be coded by the variable length coding block 15. However, applicants have found that over 97% of the difference signal values in the difference frames are in the range from -63 to +63. Therefore, by forcing the less than 3% of the difference signal values outside such range to be within such range, then variable length coding block 15 would need to code only 127 different levels instead of 255 different levels. In other words, by truncating the less than 3% of the different signal values when they fall outside the range of -63 to +63, the dynamic range of the difference signals is much reduced so that the values of the quantizer and offset applied by blocks 13, 12 can be made to more closely differentiate between the signal values within the range -63 to +63 to improve picture quality. This function is performed by block 14.

The range clamping block 14 compares the difference signal values in the frames from quantizer block 13 to thresholds. If the difference signal value is greater than 63, then the value is set to 63 whereas if the difference signal value is less than -63 then it is set to -63. This process can be implemented simply by comparing the amplitude of the signal value to a threshold, such as 63. In general, if the amplitude of the difference signal exceeds a threshold, the amplitude of the signal may be set to a predetermined value, which can be one half or one quarter of the maximum possible value of the amplitude of such difference signal. After the amplitude of the signal has been set to a predetermined value, the difference signal itself would retain the sign of the original difference signal. Obviously, other thresholds and permitted ranges for the different signal values may be used and are within the scope of the invention. Again, the thresholds and values to which the signals over the thresholds may be set are selectable by the user through control 30.

As described above, there will be instances where the rate buffer 16 is almost full so that only an incomplete frame can be stored and the missing pixel values of the frame will be lost. In conventional video data compression systems, incomplete frames are discarded and not transmitted at all. In many instances, the frames discarded are almost complete. The discarding of such almost complete frames is wasteful of resources and reduces the performance of the system. Another aspect of the invention is based on the observation that such almost complete frames should be transmitted and displayed when received at the decoder. To simplify the operation of the system, the encoder 1 simply transmits all frames, whether they are complete or not. Thus, when the rate buffer 16 detects that the end pointer is within a predetermined number of bytes from the begin pointer, such as four bytes, instead of continuing to record the data for the current frame, the rate buffer 16 will insert a symbol in the frame that is stored in the buffer, indicating that the frame is incomplete.

The decoder 2 receives through the communication channel or medium 3 a bitstream from rate buffer 16 conveying the variable length coded signal values together with the quantizer values that have been applied by block 13. Variable length decoding block 40 in the decoder 2 decodes the bitstream in a process that is the converse of that applied by block 15 in the encoder. The inverse quantizer block 41 then multiplies the signal values in the frames provided by block 40 by the corresponding quantizer values received through channel or medium 3. The partial frame detection and handling block 42 then determines from the frames received from block 41 which frame(s) are incomplete by detecting the symbol inserted by the rate buffer 16, and obtains a measure of their completeness. This can be simply done by checking the number of complete lines of difference signal values in the partial or incomplete frame when the symbol is detected.

If a complete frame contains 288 lines, and if more than a certain number of lines are present in the partial frame, then the partial frame is worth displaying and should not discarded. This decision is made in block 42 which determines the number of complete lines in the partial frame received. In one embodiment, if block 42 determines that 16 or fewer lines out of a total of 288 lines are missing from the partial frame then the partial frame is worth displaying and should not be discarded. Block 42 counts the number of complete lines present when the symbol is detected and compares the number of lines to a predetermined value. If the number of complete lines present when the symbol is read exceeds such predetermined number, then the partial frame should be displayed and not discarded. The measure of completeness or percentage of completeness may be 15/16, or about 94%. In other words, if the partial frame is at least 94% complete, then it will not be discarded but will be processed and sent to storage 50 and displayed by display 51 if desired. Obviously a percentage or value different from the above percentage or fraction may also be used.

Upon initialization, the reference frame 43 stores a frame with all zero signal values. Therefore, when the first frame is applied by block 42 to adder 44, the first frame will be unaltered at the output of adder 44; such frame is then sent to storage 50 and may be displayed by display 51. Such frame is also stored in the reference frame 43 to replace the initial all zero reference frame. Subsequent frames will contain only difference signal values; these values are added by adder 44 to the reference frame on a pixel-by-pixel basis to form reconstructed frames which are then sent to storage 50. Alternatively, the first frame may be received directly from the encoder without any processing and stored in storage 50 and reference frame storage 43. When the second and subsequent frames, which are difference frames, in the time sequence are received by the decoder, such frames would be processed as described above to decode such frames, which are then stored and displayed as desired.

If an incomplete or partial frame is sent by block 42 to adder 44, the data in the reference frame storage 43 for the missing lines of the frame are simply not updated by blocks 42, 44 so that the signal values in the reference frame for such lines will be used and sent to storage 50.

While the invention has been described above by reference to various embodiments, it will be understood that changes and modifications may be made without departing from the scope of the invention which is to be limited only by the appended claims and their equivalents. Thus, while the offset adjustment, range clamping, transmission of incomplete frames and the determination as to whether an incomplete frame received at the decoder should be discarded or displayed are described in the preferred embodiment for processing time domain video signals, it will be understood that these techniques are also applicable for processing signals in other domains, such as signals in the frequency domain or other transform domains.

## Claims

1. A method for encoding a time sequence of frames of video signals, comprising the steps of:

   computing a difference frame between two consecutive frames in the sequence; and quantizing the difference frame of video signals or a frame of video signals derived therefrom employing quantizers that reduce a bandwidth or number of bytes for coding the video signals in the difference frame to generate a compressed difference frame.

2. The method of claim 1, said quantizing step employing quantizers greater than 1 used for dividing the video signals in the difference frame.

3. The method of claim 1, further comprising adding an offset to at least some of the video signals in the difference frame prior to the quantizing step.

4. The method of claim 3, further comprising:

   transmitting the compressed difference frame or a frame derived therefrom through a channel having a bandwidth; and monitoring the bandwidth of the channel utilized by the transmission; and altering the offset added in the adding step as a function of the bandwidth utilized by the transmission.

5. The method of claim 1, further comprising:

   transmitting the compressed difference frame or a frame derived therefrom through a channel; and monitoring the bandwidth of the channel utilized by the transmission; and altering the quantizers in the quantizing step as a function of the bandwidth utilized by the transmission.

6. The method of claim 1, further comprising comparing the amplitudes of the video signals in the difference frame to a threshold, and setting at least one of the video signals in the difference frame to a predetermined value when the amplitude of the at least one signal exceeds the threshold.

7. The method of claim 6, wherein said amplitudes of the video signals in the difference frame have a maximum possible value, said threshold and said predetermined value being about one half of the maximum possible value.

8. The method of claim 6, wherein said amplitudes of the video signals in the difference frame have a maximum possible value, said threshold and said predetermined value being about one quarter of the maximum possible value.

9. A method for encoding a time sequence of frames of video information, comprising the steps of:

computing differences between pairs of consecutive frames, or frames derived therefrom, in the sequence to obtain a sequence of corresponding difference frames; and
quantizing the difference frames or frames derived therefrom to provide a sequence of quantized frames; and
transmitting the quantized frames through a medium having a bandwidth, wherein the transmitting step transmits less than a complete frame of at least one of the quantized frames when the bandwidth of the medium is inadequate for transmission of said at least one of the quantized frames.

10. The method of claim 9, said method further comprising tagging said at least one of the quantized frames as an incomplete frame.

11. The method of claim 10, further comprising:

storing the quantized frames sequentially in a buffer prior to their transmission; and
detecting the unfilled capacity of the buffer.

12. The method of claim 11, wherein said tagging step tags a quantized frame to be stored as an incomplete frame when the detecting step detects that the unfilled capacity of the buffer is inadequate for storing such quantized frame to be stored.

13. A method for decoding a time sequence of frames containing video information received from a medium, wherein at least one of said frames may be an incomplete frame, comprising the steps of:

detecting any incomplete frame in the sequence of frames received;
obtaining a measure of completeness of any incomplete frame detected; and
determining whether to discard any incomplete frame detected from said measure of its completeness according to a criterion.

14. The method of claim 13, wherein any incomplete frame in said sequence is tagged by a symbol, said detecting step detecting said symbol.

15. The method of claim 13, said obtaining step obtaining a percentage of completeness of any incomplete frame detected.

16. The method of claim 15, further comprising discarding any incomplete frame that is less than about 94% complete.

17. A method for encoding a time sequence of frames of video information, comprising the steps of:

computing differences between at least two consecutive frames in the sequence, or frames derived therefrom, to obtain at least one corresponding difference frame;
adding an offset to at least some of the signals in the difference frame to provide a modified difference frame; and
quantizing the modified difference frame or a frame derived therefrom to provide a quantized frame of signals.

18. The method of claim 17, further comprising:

transmitting the quantized frame or a frame derived therefrom through a channel;
monitoring the bandwidth of the channel utilized by the transmission; and
altering the offset added in the adding step as a function of the bandwidth utilized by the transmission.

19. The method of claim 17, further comprising:

transmitting the quantized frame or a frame derived therefrom through a channel;
monitoring the bandwidth of the channel utilized by the transmission; and
altering the quantizers in the quantizing step as a function of the bandwidth utilized by the transmission.

20. A method for encoding a time sequence of frames of video information, comprising the steps of:

computing differences in signals between at least two consecutive frames in the sequence, or frames derived therefrom, to obtain at least one corresponding difference frame of signals;
comparing the amplitudes of the signals in the difference frame to a threshold, and setting at least one of the signals in the difference frame to a predetermined value when amplitude of the at least one signal exceeds the threshold to provide a modified difference frame; and
quantizing the modified difference frame or a frame derived therefrom to provide a quantized frame of signals.

21. The method of claim 20, said threshold and said predetermined value being about one half of the maximum amplitude of the video signals in the difference frame.

22. The method of claim 20, said threshold and said predetermined value being about one quarter of the maximum amplitude of the video signals in the difference frame.

23. The method of claim 20, said predetermined value being a non-zero value.

24. A system for encoding a time sequence of frames of video signals, comprising:

means for computing a difference frame between two consecutive frames in the sequence; and

means for quantizing the difference frame of video signals or a frame of video signals derived therefrom employing quantizers that reduce number of bytes for coding the video signals in the difference frame to generate a compressed difference frame.

25. A system for encoding a time sequence of frames of video information, comprising:

means for computing differences between pairs of consecutive frames in the sequence, or frames derived therefrom, to obtain a sequence of corresponding difference frames;

means for quantizing the difference frames or frames derived therefrom to provide a sequence of quantized frames; and

means for transmitting the quantized frames through a medium having a bandwidth, wherein the transmitting means transmits less than a complete frame of at least one of the quantized frames when the bandwidth of the medium is inadequate for transmission of said at least one of the quantized frames.

26. A system for decoding a time sequence of frames containing video information received from a medium, wherein at least one of said frames may be an incomplete frame, comprising:

means for detecting any incomplete frame in the sequence of frames received;

means for obtaining a measure of completeness of any incomplete frame detected; and

means for determining whether to discard any incomplete frame detected from said measure of its completeness according to a criterion.

27. A system for encoding a time sequence of frames of video information, comprising:

means for computing a difference frame of signals between at least two consecutive frames, or frames derived therefrom, in the sequence to obtain at least one corresponding difference frame of signals;

means for adding an offset to at least some of the signals in the difference frame to provide a modified difference frame; and

means for quantizing the modified difference frame or a frame derived therefrom to provide a quantized frame of signals.

28. A system for encoding a time sequence of frames of video information, comprising:

means for computing a difference frame of signals between at least two consecutive frames in the sequence, or frames derived therefrom, to obtain at least one corresponding difference frame; and

means for comparing the amplitudes of the signals in the difference frame to a threshold, and setting one or more of the signals in the difference frame to one or more predetermined values when amplitude(s) of the one or more signals exceed the threshold to provide a modified difference frame; and

means for quantizing the modified difference frame or a frame derived therefrom to provide a quantized frame of signals.

**FIG._1**

EP 0 889 654 A2

$$a_{t00} \quad a_{t01} \quad a_{t02} \quad a_{t03}$$
$$a_{t10} \quad a_{t11} \quad a_{t12} \quad a_{t13} \; \ldots$$
$$a_{t20} \quad a_{t21} \quad a_{t22} \quad a_{t23}$$
$$a_{t30} \quad a_{t31} \quad a_{t32} \quad a_{t33}$$
$$\vdots \quad\quad \vdots \quad\quad \vdots \quad\quad \vdots$$

IMAGE $A_t$

## FIG._2A

$$a_{t+100} \quad a_{t+101} \quad a_{t+102} \quad a_{t+103}$$
$$a_{t+110} \quad a_{t+111} \quad a_{t+112} \quad a_{t+113} \; \ldots$$
$$a_{t+120} \quad a_{t+121} \quad a_{t+122} \quad a_{t+123}$$
$$a_{t+130} \quad a_{t+131} \quad a_{t+132} \quad a_{t+133}$$
$$\vdots \quad\quad\quad \vdots \quad\quad\quad \vdots \quad\quad\quad \vdots$$

IMAGE $A_{t+1}$

## FIG._2B